# EUROPEAN PATENT SPECIFICATION

(11) **EP 2 741 130 B1**
(45) Date of publication and mention of the grant of the patent: **02.08.2017**
(21) Application number: 13192046.4
(22) Date of filing: 08.11.2013
(51) Int. Cl.: G02F 1/1335, G02F 1/35, F21V 8/00, H01L 33/50

(54) **Surface light source device and liquid crystal display device**
Vorrichtung für Oberflächenlichtquellen und Flüssigkristallanzeigevorrichtung
Dispositif de source de lumière en surface et dispositif d'affichage à cristaux liquides

(30) Priority: 04.12.2012 CN 201210513213
(43) Date of publication of application: 11.06.2014
(73) Proprietor: BOE Technology Group Co., Ltd., Beijing 100015 (CN)
(72) Inventor: Kim, Kiman, 100176 Beijing (CN); Yoo, Jaegeon, 100176 Beijing (CN)
(74) Representative: Brötz, Helmut

(56) References cited:
- WO-A1-99/50707
- JP-A- 2004 205 973
- JP-A- 2011 221 376
- US-A1- 2007 229 736
- US-B1- 6 469 755

## Description

### TECHNICAL FIELD

Embodiments of the present technical disclosure relate to a surface light source device and a liquid crystal display device.

### BACKGROUND

Liquid crystal display devices have been widely used due to the advantages of thin profile and light weight. In spite of the various excellent characteristics, a liquid crystal panel does not emits light by its own, so a surface light source device is required at the rear of the liquid crystal panel in the liquid crystal display device.

At present there have been many methods of improving efficiency of a liquid crystal display device with a surface light source device. Typically, lamination polarization elements in a multi-layer structure (for example, DBEF from 3M Company) and etc. are used in order to improve the utilization rate of light.

In order to manufacture a lamination polarization element in a multi-layer structure, usually at least three different cholesteric liquid crystals (CLC) are coated in lamination in order to correspond to the monochromatic light of each of RGB colors. Therefore, problems of difficult manufacturing and increasing costs arise, so it is difficult to manufacture the surface light source with high utilization rate of light.
In US 6 469 755 B1, the illumination apparatus has a light guide, a light source; a lamp cover disposed to partly cover light source; a cholesteric liquid crystal layer disposed in a lamination, via an air gap, of a polarization splitter on an external surface of light guide (facing liquid crystal display element); a retardation film as a polarization converter; and a microprism array as an optical path converter; and a polarization retaining reflector disposed on the back surface of the light guide via air gap. This illumination apparatus emits a monochrome (blue) light having a narrow band region.

### SUMMARY

The embodiments of the present technical disclosure provide a surface light source device with low costs and high utilization rate of light.

One aspect of the present technical disclosure provides an surface light source device which comprises: a light guide plate; a monochromatic light source located at a side of an incidence surface of the light guide plate; and a cholesteric liquid crystal film, and a λ/4 wave sheet sequentially located at a side of an emission surface of the light guide plate, characterized in that the surface light source device further comprises a wavelength converting thin film located on the λ/4 wave sheet.

For example, in the surface light source device, the cholesteric liquid crystal film and the wavelength converting thin film are respectively adhered to two sides of the λ/4 wave sheet.

For example, in the surface light source device, the cholesteric liquid crystal film, the λ/4 wave sheet, and the wavelength converting thin film are formed integrally, and the cholesteric liquid crystal film and the wavelength converting thin film are respectively located at two sides of the λ/4 wave sheet.

For example, the surface light source device may comprise a diffuse reflection sheet located at the other side of the light guide plate.

For example, in the surface light source device, the monochromatic light source is a point light source or a linear light source.

For example, in the surface light source device, the monochromatic light source is a blue light source.

For example, in the surface light source device, the wavelength converting thin film comprises a single layer of fluorescent material or quantum dot material, or is in a multi-layered structure formed by laminating multiple layers of fluorescent material, or by laminating multiple layers of quantum dot material.

Another aspect of the present technical disclosure provides a liquid crystal display device, comprising any of the aforementioned surface light source devices.

The embodiments of the present technical disclosure provide the surface light source device with improved utilization rate of light and low costs by using a monochromatic light source and a single layer of CLC thin film.

Further scope of applicability of the present technical disclosure will become apparent from the detailed description given hereinafter. However, it should be understood that the detailed description and specific examples, while indicating preferred embodiments of the technical disclosure, are given by way of illustration only, since various changes and modifications will become apparent to those skilled in the art from the following detailed description.

### BRIEF DESCRIPTION OF THE DRAWINGS

In order to clearly illustrate the technical solution of the embodiments of the technical disclosure, the drawings of the embodiments will be briefly described in the following; it is obvious that the described drawings are only related to some embodiments of the technical disclosure and thus are not limitative of the technical disclosure.
Figs. 1A and 1B are schematic views of the surface light source device in embodiment 1 of the present technical disclosure;
Fig. 2 is a schematic view of the surface light source device in embodiment 2 of the present technical disclosure;
Fig. 3 is a schematic view of the surface light source device in embodiment 3 of the present technical disclosure; and
Fig. 4 is a schematic view of another surface light source device in embodiment 3 of the present technical disclosure.

### DETAILED DESCRIPTION

The technical solutions of the technical disclosure will be described in detail in connection with the drawings and embodiments, which are given by way of illustration only and are not limitative of the protection scope of the present technical disclosure.

Unless otherwise defined, the technical or scientific terms used herein shall have the general meanings understandable for those ordinarily skilled in the field of the present technical disclosure. The words such as "a", "an", "the" or similar shall not represent limitation of numbers, but mean existence of at least one. The words "include", "comprise" or similar intend to mean the elements or objects before such words cover or are equivalent to the elements or objects listed after such words, but other elements or objects are not exclusive. The words "upper", "lower", "left", "right" and etc. shall be used only to represent relative positions, wherein, when the absolute position of the described object is changed, the relative positions may be changed accordingly.

### Embodiment 1

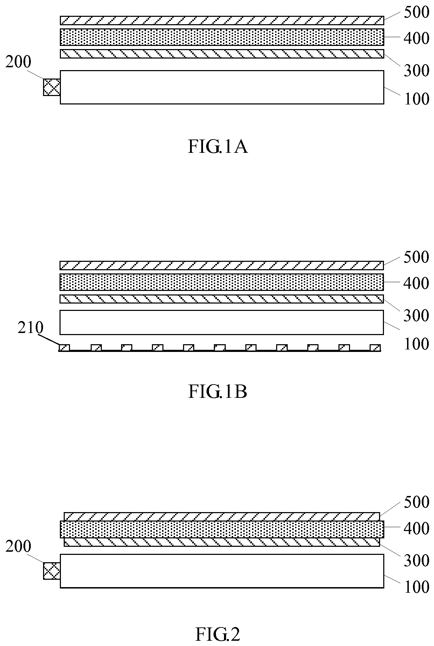

As shown in Fig. 1A, the surface light source device of the present embodiment comprises: a light guide plate 100 and a monochromatic light source 200 on the light guide plate 100. An upper surface of the light guide plate 100 is an emission surface where light is emitted out, and a left side surface thereof is an incidence surface. That is, monochromatic light emitted from the monochromatic light source 200 enters into the light guide plate 100 from the left side surface and exits out from the upper surface of the light guide plate 100 after being refracted and reflected. Although the monochromatic light source 200 is located at one side of the light guide plate 100 as shown in Fig. 1A, light sources may be disposed at two sides of the light guide plate at the same time.

The surface light source device further comprises: a cholesteric liquid crystal film 300, a λ/4 wave sheet 400 and a wavelength converting thin film 500 sequentially located at a side of the light guide plate 100. The cholesteric liquid crystal film 300, the λ/4 wave sheet 400 and the wavelength converting thin film 500 are each in the state of a single thin film and are laminated sequentially on one another.

The cholesteric liquid crystal film 300 selectively transmits or reflects the monochromatic light emitted from the light guide plate, based on the twist direction of its pitch, as a left-handed or a right-handed circularly polarized light.

The λ/4 wave sheet 400 converts the circularly polarized light emitted from cholesteric liquid crystal film 300 into a linearly polarized light.

The wavelength converting thin film 500 changes the wavelength of the monochromatic linearly polarized light emitted from the λ/4 wave sheet 400 and converts the light into a linearly polarized light of other colors.

In the present embodiment, the wavelength converting thin film 500 may comprise a single layer of a fluorescent material or a quantum dot material, or is in a multi-layered structure formed by laminating multiple layers of fluorescent materials, or by laminating multiple layers of quantum dot material. For example, for a red quantum dot material, when it is irradiated by light having a wavelength shorter than that of red light (e.g., blue light), the red quantum dot material can be excited to generate red light. The light with a shorter wavelength has higher energy, and only light of higher energy can excite to generate light of lower energy, thus the wavelength of the light source shall be shorter than the wavelength of the colored light generated from the excited quantum dot material).

The quantum dot material(s) in the present embodiment may be at least one of zinc sulfide (ZnS), zinc oxide (ZnO), gallium nitride (GaN), zinc selenide (ZnSe), cadium sulfide (CdS), gallium selenide (GaSe), cadium selenide (CdSe), zinc telluride (ZnTe), cadium telluride (CdTe), gallium arsenide (GaAs), indium phosphide (InP) and lead telluride (PbTe). Of course, the material of the quantum dots includes, but is not limited to, the above listed materials, and other materials having characteristics the same as or similar to those of the above-mentioned substances may also be applied. Take zinc sulfide (ZnS) quantum dot for example, the quantum dot emitting red light has a size of about 9-10 nm, the quantum dot emitting yellow light has a size of about 8 nm, and the quantum dot emitting green light has a size of about 7 nm.

The fluorescent material or quantum dot material, for example, may be dispersed into a transparent resin material to be manufactured into the wavelength converting thin film 500 in a layer structure, or may be coated or deposited on a transparent substrate to form the wavelength converting thin film 500.

Since most display devices are based on RGB mode, the monochromatic light source of the present embodiment is preferably a blue light source, which may be a point light source (e.g., light emitting diode (LED)) or a linear light source (e.g., cold cathode fluorescent lamp (CCFL)). If the wavelength converting thin film 500 comprises a single layer of quantum dot materials, two kinds of quantum dot materials for red and green light are required to generate red light and green light respectively. The cholesteric liquid crystal film 300 has a pitch similar or equal to the wavelength of the blue light so as to transmit and scatter the blue circular light. Of course, the monochromatic light source may also emit purple light, which has shorter wavelength, and three kinds of quantum dot materials for blue, green and red light may be required. The cholesteric liquid crystal film 300 has a pitch similar or equal to the wavelength of the purple light.

Fig. 1B shows a variation of the surface light source device of the present embodiment. The surface light source device shown in Fig. 1A is of an edge lighting type, while the surface light source device shown in Fig. 1B is of a direct lighting type. In this variation, a plurality of monochromatic light sources 210 are provided at the lower side of the light guide plate 100 and on a back plate. In this case, the lower surface of the light guide plate 100 is the incidence surface while the upper surface thereof is still the emission surface. The monochromatic light sources 210 may still be point light sources or linear light sources.

Compared with the traditional white light source using multiple layers of CLC thin film, the surface light source device of the present embodiment improves the utilization rate of light with a simple process and low costs.

### Embodiment 2

In the above embodiment 1, the cholesteric liquid crystal film 300, the λ/4 wave sheet 400 and the wavelength converting thin film 500 each is in a state of a single thin film. That is, the opposing interfaces of the films are not bonded to each other, which may cause Fresnel reflection between the opposing interfaces and thus lead to reduced transmittance and low utilization rate of light. In the surface light source device of the present embodiment, the cholesteric liquid crystal film 300, the λ/4 wave sheet 400 and the wavelength converting thin film 500 are bonded to each other.

As shown in Fig. 2, the surface light source device of the present embodiment comprises: a light guide plate 100 and a monochromatic light source 200 on the light guide plate 100. It further comprises: a cholesteric liquid crystal film 300, a λ/4 wave sheet 400 and a wavelength converting thin film 500 sequentially located at a side of the light guide plate 100, and the cholesteric liquid crystal film 300 and the wavelength converting thin film 500 are respectively adhered (by adhesive) to two sides of the λ/4 wave sheet 400. Such structure may reduce the Fresnel reflection in the lamination and improve the transmittance of light.

Furthermore, in one example, the cholesteric liquid crystal film 300, the λ/4 wave sheet 400 and the wavelength converting thin film 500 can be formed integrally. The λ/4 wave sheet 400 is taken as a substrate, on two sides of which the cholesteric liquid crystal film 300 and the wavelength converting thin film 500 are manufactured, so that the three are formed integrally, and no adhesive is needed. Therefore, the materials are saved, the transmittance of light becomes higher, and the resulted surface light source device is lighter and thinner.

Compared with the embodiment 1, the present embodiment can further improve the utilization rate of light.

### Embodiment 3

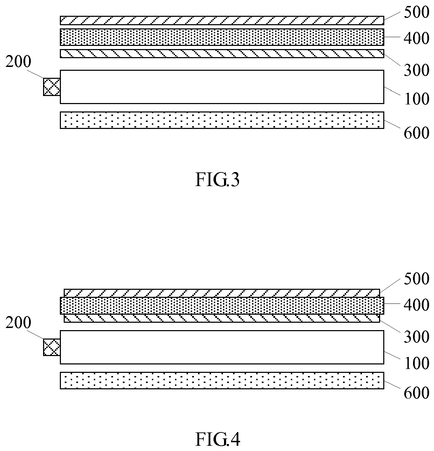

In order to further improve the utilization rate of light, as shown in Figs. 3 and 4, the surface light source device of the present embodiment further comprises a diffuse reflection sheet 600 located at the other side of the light guide plate 100 on the basis of the embodiments 1 and 2.

Since the cholesteric liquid crystal film 300 has both the transmission and scattering effects on the monochromatic light, the scattered monochromatic light will exit from below the light guide plate 100. As for the right-handedness cholesteric liquid crystal whose pitch is similar to the wavelength of the incident light, if the left-handed circular light (i.e. the light in an inverse handedness state with respect to the twist direction) is incident, light transmission is produced; if the right-handed light is incident, light scattering the same as Bragg reflection is produced. Then, the monochromatic light exiting from the lower side of the light guide plate 100 is rearranged by the diffuse reflection sheet 600 and reflected towards the cholesteric liquid crystal film 300, and the reflected light may transmit through the cholesteric liquid crystal film 300, whereby the utilization rate of light is further improved.

When the surface light source device is of a direct lighting type, the back plate on which the monochromatic light source is disposed may serve as a carrier of the diffuse reflection sheet 600.

### Embodiment 4

The present embodiment further provides a liquid crystal display device, which comprises a surface light source device according to any of the foregoing embodiment 1, 2 or 3. The liquid crystal display device may be an e-paper, a liquid crystal television, a liquid crystal display, a digital photo frame, a mobile phone, a flat panel computer and other products or members having display function.

The above embodiments of the present technical disclosure are given by way of illustration only and thus are not limitative of the protection scope of the present technical disclosure, which is determined by the attached claims.

## Claims

1. A surface light source device, comprising:
a light guide plate (100);
a monochromatic light source (200) located at a side of an incidence surface of the light guide plate (100); and
a cholesteric liquid crystal film (300), and a λ/4 wave sheet (400) sequentially located at a side of an emission surface of the light guide plate (100),
**characterized in that**,
the surface light source device further comprises a wavelength converting thin film (500) located on the λ/4 wave sheet (400).

2. The surface light source device according to claim 1, **characterized in that**, the cholesteric liquid crystal film (300) and the wavelength converting thin film (500) are respectively adhered to two sides of the λ/4 wave sheet (400).

3. The surface light source device according to claim 1, **characterized in that**, the cholesteric liquid crystal film (300), the λ/4 wave sheet (400), and the wavelength converting thin film (500) are formed integrally, and the cholesteric liquid crystal film (300) and the wavelength converting thin film (500) are respectively located at two sides of the λ/4 wave sheet (400).

4. The surface light source device according to any one of claims 1-3, **characterized in that**, it further comprises a diffuse reflection sheet (600) located at the other side of the light guide plate (100).

5. The surface light source device according to any one of claims 1-4, **characterized in that**, the monochromatic light source (200) is a point light source or a linear light source.

6. The surface light source device according to any one of claims 1-5, **characterized in that**, the monochromatic light source (200) is a blue light source.

7. The surface light source device according to any one of claims 1-6, **characterized in that**, the wavelength converting thin film (500) comprises a single layer of fluorescent material or quantum dot material, or is in multi-layered structure formed by laminating multiple layers of fluorescent materials, or by laminating multiple layers of quantum dot materials.

8. The surface light source device according to any one of claims 1-6, **characterized in that**, the surface light source device is of an edge lighting type or of a direct lighting type.

9. A liquid crystal display device, **characterized in that**, it comprises a surface light source device according to any one of claims 1-7.

## Patentansprüche

1. Oberflächenlichtquellenvorrichtung, umfassend:
eine Lichtleiterplatte (100);
eine monochromatische Lichtquelle (200), lokalisiert an einer Seite einer Einfalloberfläche der Lichtleiterplatte (100); und
einen cholesterischen Flüssigkristallfilm (300) und eine λ4-Wellenschicht (400), sequentiell lokalisiert an einer Seite einer Austrittsoberfläche der Lichtleiterplatte (100),
**dadurch gekennzeichnet,**
**dass** die Oberflächenlichtquellenvorrichtung einen Wellenlängenkonvertierungsdünnfilm (500) umfasst, der auf der λ4-Wellenschicht (400) lokalisiert ist.

2. Oberflächenlichtquellenvorrichtung gemäß Anspruch 1, **dadurch gekennzeichnet, dass** der cholesterische Flüssigkristallfilm (300) und der Wellenlängenkonvertierungsdünnfilm (500) an zwei Seiten der λ4-Wellenschicht (400) angehaftet sind.

3. Oberflächenlichtquellenvorrichtung gemäß Anspruch 1, **dadurch gekennzeichnet, dass** der cholesterische Flüssigkristallfilm (300), die λ4-Wellenschicht (400) und der Wellenlängenkonvertierungsdünnfilm (500) integral ausgebildet sind und dass der cholesterische Flüssigkristallfilm (300) und der Wellenlängenkonvertierungsdünnfilm (500) an zwei Seiten der λ4- Wellenschicht (400) lokalisiert sind.

4. Oberflächenlichtquellenvorrichtung gemäß einem der Ansprüche 1 bis 3, **dadurch gekennzeichnet, dass** sie eine Diffuse-Reflektions-Schicht (600), lokalisiert an der anderen Seite der Lichtleiterplatte (100), aufweist.

5. Oberflächenlichtquellenvorrichtung gemäß einem der Ansprüche 1 bis 4, **dadurch gekennzeichnet, dass** die monochromatische Lichtquelle (200) eine Punktlichtquelle oder eine Linearlichtquelle ist.

6. Oberflächenlichtquellenvorrichtung gemäß einem der Ansprüche 1 bis 5, **dadurch gekennzeichnet, dass** die monochromatische Lichtquelle (200) eine blaue Lichtquelle ist.

7. Oberflächenlichtquellenvorrichtung gemäß einem der Ansprüche 1 bis 6, **dadurch gekennzeichnet, dass** der Wellenlängenkonvertierungsdünnfilm (500) eine einzelne Lage aus fluoreszierendem Material oder Quantenpunktmaterial aufweist oder als mehrlagige Struktur gebildet ist mittels Laminierung von mehreren Lagen aus fluoreszierendem Material oder mittels Laminieren von mehreren Lagen aus Quantenpunktmaterialien.

8. Oberflächenlichtquellenvorrichtung gemäß einem der Ansprüche 1 bis 6, **dadurch gekennzeichnet, dass** die Oberflächenlichtquellenvorrichtung von einem Kantenlichttyp oder von einem Direktlichttyp ist.

9. Flüssigkristallanzeigevorrichtung, **dadurch gekennzeichnet, dass** sie eine Oberflächenlichtquellenvorrichtung gemäß einem der Ansprüche 1 bis 7 aufweist.

## Revendications

1. Un dispositif de source de lumière surfacique, comprenant :
une plaque de guidage de lumière (100) ;
une source de lumière monochromatique (200) située sur un côté d'une surface d'incidence de la plaque de guidage de lumière (100) ; et
un film de cristaux liquides cholestériques, et une feuille d'onde λ/4 (400) positionnée séquentiellement sur un côté d'une surface d'émission de la plaque de guidage de lumière (100),
**caractérisé en ce que**
le dispositif de source de lumière surfacique comprend en outre un film mince de conversion de longueur d'onde (500) situé sur la feuille d'onde λ/4 (400).

2. Le dispositif de source de lumière surfacique selon la revendication 1, **caractérisé en ce que** le film de cristaux liquides cholestériques (300) et le film mince de conversion de longueur d'onde (500) sont respectivement collés sur deux côtés de la feuille d'onde λ/4 (400).

3. Le dispositif de source de lumière surfacique selon la revendication 1, **caractérisé en ce que** le film de cristaux liquides cholestériques (300), la feuille d'onde λ/4 (400) et le film mince de conversion de longueur d'onde (500) sont formés d'un seul tenant, et le film de cristaux liquides cholestériques (300) et le film mince de conversion de longueur d'onde (500) sont respectivement situés sur deux côtés de la feuille d'onde λ/4 (400).

4. Le dispositif de source de lumière surfacique selon l'une quelconque des revendications 1 à 3, **caractérisé en ce qu'**il comprend en outre une feuille de réflexion diffuse (600) située de l'autre côté de la plaque de guidage de lumière (100).

5. Le dispositif de source de lumière surfacique selon l'une quelconque des revendications 1 à 4, **caractérisé en ce que** la source de lumière monochromatique (200) est une source de lumière ponctuelle ou une source de lumière linéaire.

6. Le dispositif de source de lumière surfacique selon l'une quelconque des revendications 1 à 5, **caractérisé en ce que** la source de lumière monochromatique (200) est une source de lumière bleue.

7. Le dispositif de source de lumière surfacique selon l'une quelconque des revendications 1 à 6, **caractérisé en ce que** le film mince de conversion de longueur d'onde (500) comprend une seule couche de matériau fluorescent ou matériau de boîtes quantiques, ou est en structure multicouches formée par stratification de multiples couches de matériaux fluorescents ou en stratifiant plusieurs couches de matériaux de boîtes quantiques.

8. Dispositif de source de lumière surfacique selon l'une quelconque des revendications 1 à 6, **caractérisé en ce que** le dispositif de source de lumière surfacique est d'un type à éclairage par les bords ou d'un type à éclairage direct.

9. Dispositif d'affichage à cristaux liquides, **caractérisé en ce qu'**il comprend un dispositif de source de lumière surfacique selon l'une quelconque des revendications 1 à 7.
